# EUROPEAN PATENT APPLICATION

(11) **EP 4 465 738 A1**
(43) Date of publication of application: **20.11.2024**
(21) Application number: 22917940.3
(22) Date of filing: 10.01.2022
(51) Int. Cl.: H04W 74/08

(54) **METHOD AND APPARATUS FOR SUSPENDING LISTENING, AND COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Stöckeler, Ferdinand
(86) International application number: PCT/CN2022/071114
(87) International publication number: WO 2023/130470

(57) **Abstract**

Provided in the embodiments of the present disclosure are a method for suspending listening. The method is executed by a base station, and the method comprises: sending physical downlink control channel (PDCCH) listening suspension information to a terminal, wherein the PDCCH listening suspension information indicates that the terminal suspends listening to a PDCCH on a predetermined carrier, and the predetermined carrier comprises at least one of a primary carrier and a secondary carrier. Therefore, since PDCCH listening suspension information indicates that a terminal suspends listening to a PDCCH on a primary carrier and/or a secondary carrier, the terminal may determine, on the basis of the PDCCH listening suspension information, whether to listen or not listen to the PDCCH on the primary carrier and/or the secondary carrier. Compared with the method of always needing to listen to a PDCCH on a primary carrier and/or a secondary carrier, the present invention can save on electric energy, and improve the endurance time of a terminal.

## Description

### FIELD

The present disclosure relates to, but is not limited to, the technical field of wireless communication, and in particular, to a method and apparatus for skipping monitoring, a communication device, and a storage medium.

### BACKGROUND

In carrier aggregation, different carriers cooperate with each other, and there are primary component carriers and secondary component carriers. The primary component carrier is used to carry a signaling and manage other carriers, and corresponds to a primary cell (Pcell). The secondary component carrier is used for bandwidth expansion and rate improvement, and corresponds to a secondary cell (Scell).

In related scenarios, the primary component carrier and the secondary component carrier need to be monitored. However, for the secondary component carrier, the data volume transmitted is relatively less or the transmission speed is faster. Therefore, the primary component carrier and the secondary component carrier have different monitoring requirements.

### SUMMARY

Embodiments of the present disclosure provide a method and apparatus for skipping monitoring, a communication device and a storage medium.

According to a first aspect of embodiments of the present disclosure, there is provided a method for skipping monitoring, which is performed by a base station, and includes: sending physical downlink control channel (PDCCH) monitoring skipping information to a terminal. The PDCCH monitoring skipping information indicates the terminal to skip a PDCCH monitoring on a predetermined carrier; and the predetermined carrier includes at least one of a primary component carrier or a secondary component carrier.

In an embodiment, sending the physical downlink control channel (PDCCH) monitoring skipping information to the terminal includes: sending the PDCCH monitoring skipping information to the terminal on the primary component carrier.

In an embodiment, the predetermined carrier is the secondary component carrier; and the PDCCH monitoring skipping information indicates: at least one secondary component carrier; and/or at least one secondary component carrier group. The secondary component carrier group includes a plurality of secondary component carriers in the same frequency range (FR).

In an embodiment, the predetermined carrier is the secondary component carrier; and the PDCCH monitoring skipping information indicates the terminal not to terminate skipping the PDCCH monitoring on the secondary component carrier in advance, with a determination that the terminal initiates a random access process on the secondary component carrier.

In an embodiment, the method further includes: determining an effective duration of the PDCCH monitoring skipping information according to a subcarrier spacing of a bandwidth part (BWP) configured by the secondary component carrier group; or determining an effective duration of the PDCCH monitoring skipping information according to a subcarrier spacing of a BWP used by the terminal on the secondary component carrier.

In an embodiment, the predetermined carrier is the primary component carrier or the secondary component carrier; and the PDCCH monitoring skipping information indicates: skipping the PDCCH monitoring on the primary component carrier and performing the PDCCH monitoring on the secondary component carrier; or skipping the PDCCH monitoring on both the primary component carrier and the secondary component carrier.

In an embodiment, a duration of skipping the PDCCH monitoring on the secondary component carrier is determined according to a duration of skipping the PDCCH monitoring on the primary component carrier.

In an embodiment, the method further includes: determining an effective duration of the PDCCH monitoring skipping information according to a subcarrier spacing of a BWP configured by the primary component carrier; or determining an effective duration of the PDCCH monitoring skipping information according to a subcarrier spacing of a BWP configured by the primary component carrier and the secondary component carrier; or determining an effective duration of the PDCCH monitoring skipping information according to a subcarrier spacing of a BWP used by the terminal on the primary component carrier.

In an embodiment, the PDCCH monitoring skipping information indicates: terminating skipping the PDCCH monitoring on the primary component carrier in advance, with a determination that a random access process is initiated on the primary component carrier; or terminating skipping the PDCCH monitoring on the primary component carrier in advance, with a determination that a random access process is initiated on the secondary component carrier; or terminating skipping the PDCCH monitoring on the primary component carrier and the secondary component carrier in advance, with a determination that a random access process is initiated on the secondary component carrier.

In an embodiment, the method further includes: receiving auxiliary information sent by the terminal. The auxiliary information at least includes information that skipping the PDCCH monitoring is expected.

In an embodiment, the auxiliary information includes one or more of: a number of secondary cell groups; information of the predetermined carrier; or terminal capability information that skipping the PDCCH monitoring on the predetermined carrier is supported or not supported.

According to a second aspect of embodiments of the present disclosure, there is provided a method for skipping monitoring, which is performed by a terminal, and includes: receiving physical downlink control channel (PDCCH) monitoring skipping information sent by a base station. The PDCCH monitoring skipping information indicates a terminal to skip a PDCCH monitoring on a predetermined carrier; and the predetermined carrier includes at least one of a primary component carrier or a secondary component carrier.

In an embodiment, receiving the PDCCH monitoring skipping information sent by the base station includes: receiving, on the primary component carrier, the PDCCH monitoring skipping information sent by the base station.

In an embodiment, the predetermined carrier is the secondary component carrier; and the PDCCH monitoring skipping information indicates: at least one secondary component carrier; and/or at least one secondary component carrier group. The secondary component carrier group includes a plurality of secondary component carriers in the same frequency range (FR).

In an embodiment, the method further includes: not terminating skipping the PDCCH monitoring on the secondary component carrier in advance according to an indication of the PDCCH monitoring skipping information, with a determination that a random access process is initiated on the secondary component.

In an embodiment, an effective duration of the PDCCH monitoring skipping information is determined according to a subcarrier spacing of a bandwidth part (BWP) configured by the secondary component carrier group; or an effective duration of the PDCCH monitoring skipping information is determined according to a subcarrier spacing of a BWP used by the terminal on the secondary component carrier.

In an embodiment, the predetermined carrier is the primary component carrier or the secondary component carrier; and the method further includes: skipping the PDCCH monitoring on the primary component carrier and performing the PDCCH monitoring on the secondary component carrier according to an indication of the PDCCH monitoring skipping information; or skipping the PDCCH monitoring on both the primary component carrier and the secondary component carrier according to an indication of the PDCCH monitoring skipping information.

In an embodiment, a duration of skipping the PDCCH monitoring on the secondary component carrier is determined according to a duration of skipping the PDCCH monitoring on the primary component carrier.

In an embodiment, an effective duration of the PDCCH monitoring skipping information is determined according to a subcarrier spacing of a BWP configured by the primary component carrier; or an effective duration of the PDCCH monitoring skipping information is determined according to a subcarrier spacing of a BWP configured by the primary component carrier and the secondary component carrier; or an effective duration of the PDCCH monitoring skipping information is determined according to a subcarrier spacing of a BWP used by the terminal on the primary component carrier.

In an embodiment, the method further includes: terminating skipping the PDCCH monitoring on the primary component carrier in advance according to the indication of the PDCCH monitoring skipping information, with a determination that a random access process is initiated on the primary component carrier; or terminating skipping the PDCCH monitoring on the primary component carrier in advance according to the indication of the PDCCH monitoring skipping information, with a determination that a random access process is initiated on the secondary component carrier; or terminating skipping the PDCCH monitoring on the primary component carrier and the secondary component carrier in advance according to the indication of the PDCCH monitoring skipping information, with a determination that a random access process is initiated on the secondary component carri er.

In an embodiment, the method further includes: sending auxiliary information to the base station. The auxiliary information at least includes information that skipping the PDCCH monitoring is expected.

In an embodiment, the auxiliary information includes one or more of: a number of secondary cell groups; information of the predetermined carrier; or terminal capability information that skipping the PDCCH monitoring on the predetermined carrier is supported or not supported.

According to a third aspect of embodiments of the present disclosure, there is provided an apparatus for skipping monitoring, which includes: a sending module, configured to send physical downlink control channel (PDCCH) monitoring skipping information to a terminal. The PDCCH monitoring skipping information indicates the terminal to skip a PDCCH monitoring on a predetermined carrier; and the predetermined carrier includes at least one of a primary component carrier or a secondary component carrier.

According to a fourth aspect of embodiments of the present disclosure, there is provided an apparatus for skipping monitoring, which includes: a receiving module, configured to receive physical downlink control channel (PDCCH) monitoring skipping information sent by a base station. The PDCCH monitoring skipping information indicates a terminal to skip a PDCCH monitoring on a predetermined carrier; and the predetermined carrier includes at least one of a primary component carrier or a secondary component carrier.

According to a fifth aspect of embodiments of the present disclosure, there is provided a communication device, which includes: a processor; and a memory for storing processor-executable instructions. The processor is configured to implement the method as described in any embodiment of the present disclosure when running the processor-executable instructions.

According to a sixth aspect of embodiments of the present disclosure, there is provided a computer storage medium, having stored therein computer-executable programs that, when executed by a processor, cause the method as described in any embodiment of the present disclosure to be implemented.

In embodiments of the present disclosure, the physical downlink control channel (PDCCH) monitoring skipping information is sent to the terminal, the PDCCH monitoring skipping information indicates the terminal to skip the PDCCH monitoring on the predetermined carrier; and the predetermined carrier includes at least one of the primary component carrier or the secondary component carrier. In this way, since the PDCCH monitoring skipping information indicates the terminal to skip the PDCCH monitoring on the primary component carrier and/or the secondary component carrier, the terminal can determine to monitor or not to monitor the PDCCH on the primary component carrier and/or the secondary component carrier according to the PDCCH monitoring skipping information, which can save power and increase the battery life of the terminal, as compared with a mode in which the PDCCH monitoring is always needed on the primary component carrier and/or the secondary component carrier.

### BRIEF DESCRIPTION OF THE DRAWINGS

FIG. 1 is a schematic structural diagram of a wireless communication system according to an illustrative embodiment of the present disclosure.
FIG. 2 is a schematic flowchart of a method for skipping monitoring according to an illustrative embodiment of the present disclosure.
FIG. 3 is a schematic flowchart of a method for skipping monitoring according to an illustrative embodiment of the present disclosure.
FIG. 4 is a schematic flowchart of a method for skipping monitoring according to an illustrative embodiment of the present disclosure.
FIG. 5 is a schematic flowchart of a method for skipping monitoring according to an illustrative embodiment of the present disclosure.
FIG. 6 is a schematic flowchart of a method for skipping monitoring according to an illustrative embodiment of the present disclosure.
FIG. 7 is a schematic flowchart of a method for skipping monitoring according to an illustrative embodiment of the present disclosure.
FIG. 8 is a schematic flowchart of a method for skipping monitoring according to an illustrative embodiment of the present disclosure.
FIG. 9 is a schematic flowchart of a method for skipping monitoring according to an illustrative embodiment of the present disclosure.
FIG. 10 is a schematic flowchart of a method for skipping monitoring according to an illustrative embodiment of the present disclosure.
FIG. 11 is a schematic flowchart of a method for skipping monitoring according to an illustrative embodiment of the present disclosure.
FIG. 12 is a schematic flowchart of a method for skipping monitoring according to an illustrative embodiment of the present disclosure.
FIG. 13 is a schematic block diagram of an apparatus for skipping monitoring according to an illustrative embodiment of the present disclosure.
FIG. 14 is a schematic block diagram of an apparatus for skipping monitoring according to an illustrative embodiment of the present disclosure.
FIG. 15 is a schematic structural diagram of a terminal for skipping monitoring according to an illustrative embodiment of the present disclosure.
FIG. 16 is a schematic block diagram of a base station for skipping monitoring according to an illustrative embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all possible implementations consistent with embodiments of the present disclosure. Instead, they are merely examples of apparatuses and methods consistent with some aspects of embodiments of the present disclosure as recited in the appended claims.

Terms used in embodiments of the present disclosure are only for the purpose of describing specific embodiments, but should not be construed to limit embodiments of the present disclosure. As used in embodiments of the present disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated items listed.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if' may be construed to mean "when" or "upon" or "in response to determining" depending on the context.

For the purposes of brevity and ease of understanding, terms "greater than" or "less than" are used herein for indicating size relationships. However, it may be understood for a person skilled in the art that the term "greater than" also covers a meaning of "greater than or equal to", and the term "less than" also covers a meaning of "less than or equal to".

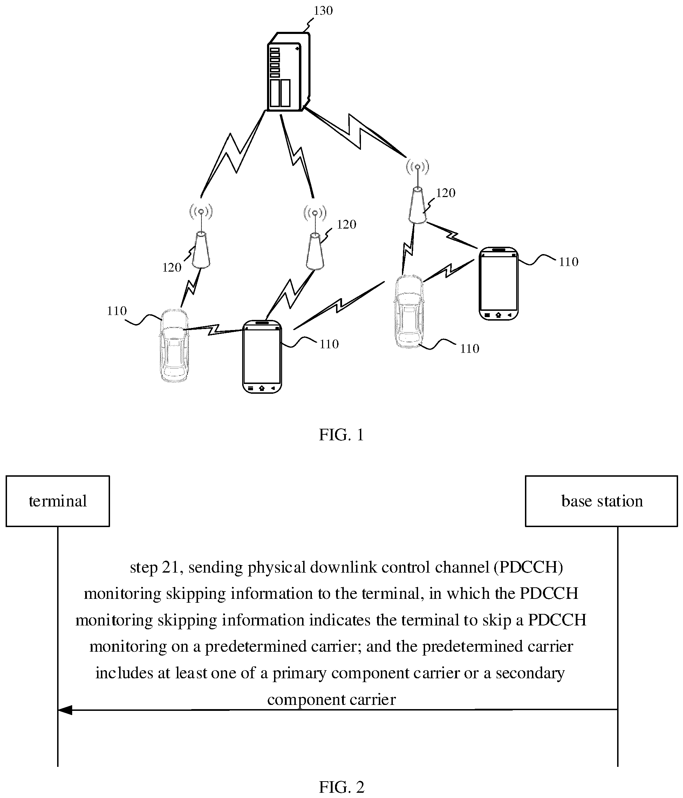

Referring to FIG. 1, which is a schematic structural diagram showing a wireless communication system according to an embodiment of the present disclosure. As shown in FIG. 1, the wireless communication system is a communication system based on a mobile communication technology, and may include several user equipment 110 and several base stations 120.

The user equipment 110 may refer to a device that provides voice and/or data connectivity to a user. The user equipment 110 is able to communicate with one or more core networks via a radio access network (RAN). The user equipment 110 may be an Internet of Things user equipment, such as a sensor device, a mobile phone and a computer with an Internet of Things user equipment. For example, the user equipment 110 may be a fixed, portable, pocket-sized, handheld, built-in computer or vehicle-mounted apparatus, such as a station (STA), a subscriber unit, a subscriber station, a mobile station, a mobile, a remote station, an access point, a remote terminal, an access terminal, a user terminal, a user agent, a user device, or a user equipment (UE). Alternatively, the user equipment 110 may be a device of an unmanned aerial vehicle. Alternatively, the user equipment 110 may be a vehicle-mounted device, for example, an electronic control unit with a wireless communication function, or a wireless user equipment externally connected with an electronic control unit. Alternatively, the user equipment 110 may be a roadside device, such as a street lamp, a signal lamp or other roadside devices with a wireless communication function.

The base station 120 may be a network side device in the wireless communication system. The wireless communication system may be a 4th generation mobile communication (4G) system, also referred to as a long term evolution (LTE) system. Alternatively, the wireless communication system may be a 5G system, also referred to as a new radio (NR) system or a 5G NR system. Alternatively, the wireless communication system may be a next generation system of the 5G system. The access network in the 5G system may be referred to as a new generation-radio access network (NG-RAN).

The base station 120 may be an evolved base station (eNB) used in the 4G system. Alternatively, the base station 120 may be a base station (gNB) adopting a central-distributed architecture in the 5G system. When adopting the central-distributed architecture, the base station 120 usually includes a central unit (CU) and at least two distributed units (DUs). The central unit is provided with protocol stacks of a packet data convergence protocol (PDCP) layer, a radio link control (RLC) layer and a media access control (MAC) layer. The distributed units are provided with a protocol stack of a physical (PHY) layer. The specific implementation of the base station 120 is not limited in embodiments of the present disclosure.

A wireless connection may be established between the base station 120 and the user equipment 110 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio may also be a wireless radio based on the next generation mobile communication network technology standard of the 5G.

In some embodiments, an end to end (E2E) connection may be established between the user equipment 11, for example, a vehicle to vehicle (V2V) communication, a vehicle to infrastructure (V2I) communication and a vehicle to pedestrian (V2P) communication in a vehicle to everything (V2X) communication.

Here, the user equipment described above may be considered as the terminal device as described in embodiments below.

In some embodiments, the wireless communication system may further include a network management device 130.

Several base stations 12 are connected to the network management device 130, respectively. The network management device 130 may be a core network device in the wireless communication system, for example, the network management device 130 may be a mobility management entity (MME) in an evolved packet core (EPC). Alternatively, the network management device may be other core network devices, such as a serving gateway (SGW), a public data network gateway (PGW), a policy and charging rules function (PCRF) or a home subscriber server (HSS), or the like. The implementation form of the network management device 130 is not limited in embodiments of the present disclosure.

In order to facilitate the understanding of those skilled in the art, several implementations are listed in embodiments of the present disclosure to clearly illustrate technical solutions as set forth in embodiments of the present disclosure. Of course, those skilled in the art can understand that various embodiments provided in the present disclosure may be executed separately, in combination with the methods as described in other embodiments of the present disclosure, or further in combination with some methods in other related art, which is not limited in embodiments of the present disclosure.

In order to better understand the technical solution as described in any embodiment of the present disclosure, application scenarios in related art are described first.

When considering power saving for a terminal, a physical downlink control channel skipping (PDCCH skipping) mechanism may be introduced. The basic working principle of this mechanism is to send indication information to the terminal to notify the terminal that a PDCCH monitoring can be skipped for a predetermined time. The indication information may be downlink control information (DCI) indication information.

Here, a duration of entry into a dormant state may be notified to the terminal by a network in advance via a radio resource control (RRC).

In an embodiment, the predetermined time of skipping the PDCCH monitoring is indicated in the DCI.

In an embodiment, M=1, where M is a number of skipping intervals configured by a high layer, and scheduling DCI includes a 1-bit information field to indicate PDCCH monitoring adaptation behaviors, with the meanings as shown in the following Table 1:

**Table 1:**

| Bit indication | Terminal behavior |
|---|---|
| 0 | Beh1 |
| 1 | Beh1A |

If M=2 or M=3, the scheduling DCI includes a 2-bit information field to indicate PDCCH monitoring adaptation behaviors, with the meanings as shown in the following Table 2:

**Table 2:**

| Bit indication | Terminal behavior |
|---|---|
| 00 | Beh1 |
| 01 | Beh1A |
| 10 | Beh1A, and application of a skipping duration 2 |
| 11 | If M=3, Beh1A and application of a skipping duration 3; |
| | If M=2, this information field is reserved. |

An elementary time unit for the skipping is X, in a unit of slot.

For a value of X in Beh1A, candidate skipping values may be:
up to a duration of 100 ms that is supported;
X is configured and indicated in the unit of slot;
working optional parameters for candidate values for X:
{1, 2, 3, ..., 20, 30, 40, 50, 60, 80, 100} for 15 kHz SCS;
{1,2,3, ...,40,60,80, 100, 120, 160, 200} for 30 kHz SCS;
{1, 2, 3, ..., 80, 120, 160, 200, 240, 320, 400} for 60kHz SCS;
{1, 2, 3, ..., 160, 240, 320, 400, 480, 640, 800} for 120kHz SCS;
equal to or longer than an applicable minimum scheduling offset;
an additional symbol level or a PDCCH monitoring period level skipping duration.

In an embodiment, in a carrier aggregation scenario, both the discontinuous reception (DRX) and the wake up signaling are common to the PCell and the Scell of the carrier aggregation, that is, the monitoring are performed simultaneously on the primary component carrier and the secondary component carrier. However, for the secondary component carrier, the data volume is often relatively less, or the data is transmitted faster due to the larger bandwidth in a scenario where the secondary component carrier uses FR2. Therefore, the monitoring time required for the secondary component carrier is less than that for the primary component carrier. Therefore, a PDCCH skipping mechanism can be used.

As shown in FIG. 2, embodiments of the present disclosure provide a method for skipping monitoring. The method is performed by a base station, and the method includes a following step.

In step 21, physical downlink control channel (PDCCH) monitoring skipping information is sent to a terminal. The PDCCH monitoring skipping information indicates the terminal to skip a PDCCH monitoring on a predetermined carrier; and the predetermined carrier indicates at least one of a primary component carrier or a secondary component carrier.

Here, the terminal involved in the present disclosure may be, but not limited to, a mobile phone, a wearable device, a vehicle-mounted terminal, a road side unit (RSU), a smart home terminal, an industrial sensing device, and/or a medical device.

The base station involved in the present disclosure may be an access device for the terminal to access a network. Here, the base station may be various types of base stations, for example, a base station of a third-generation mobile communication (3G) network, a base station of a fourth-generation mobile communication (4G) network, a base station of a fifth-generation mobile communication (5G) network, or other evolved base station.

In an embodiment, the base station sends the physical downlink control channel (PDCCH) monitoring skipping information to the terminal. The PDCCH monitoring skipping information indicates the terminal to skip the PDCCH monitoring on the predetermined carrier; and the predetermined carrier indicates at least one of the primary component carrier or the secondary component carrier. After receiving the PDCCH monitoring skipping information sent by the base station, the terminal determines to perform the PDCCH monitoring on the primary component carrier and/or the secondary component carrier according to the PDCCH monitoring skipping information; or determines to skip the PDCCH monitoring on the primary component carrier and/or the secondary component carrier according to the PDCCH monitoring skipping information.

In an embodiment, the base station sends DCI carrying the PDCCH monitoring skipping information to the terminal. After receiving the DCI sent by the base station, the terminal determines to perform the PDCCH monitoring on the primary component carrier and/or the secondary component carrier according to the PDCCH monitoring skipping information carried in the DCI; or determines to skip the PDCCH monitoring on the primary component carrier and/or the secondary component carrier according to the PDCCH monitoring skipping information carried in the DCI.

In an embodiment, the base station sends the PDCCH monitoring skipping information to the terminal on the primary component carrier. The PDCCH monitoring skipping information indicates the terminal to skip the PDCCH monitoring on the predetermined carrier. Here, the primary component carrier may be a Pcell or a Pscell.

It should be noted that the base station may also send DCI carrying PDCCH continuous monitoring information to the terminal. The PDCCH continuous monitoring information indicates the terminal to continue the PDCCH monitoring on the predetermined carrier.

In an embodiment, the predetermined carrier may be specified in a protocol or notified by the network.

In an embodiment, the predetermined carrier specified in the protocol may be all available secondary component carriers.

In an embodiment, the predetermined carrier specified in the protocol may be determined according to a certain DRX group. For example, the predetermined carrier is the primary component carrier or the secondary component carrier on a certain DRX group.

In an embodiment, if the predetermined carrier specified in the protocol is the primary component carrier, all available secondary component carriers also become the predetermined carrier.

In an embodiment, the base station explicitly indicates that the predetermined carrier is the primary component carrier or the secondary component carrier. For example, a Flag indicating identifier may be used, with different values to distinguish the primary component carrier and the secondary component carrier.

In an embodiment, the base station may explicitly indicate a range of the predetermined carri er.

In an embodiment, the base station sends the PDCCH monitoring skipping information to the terminal, and the PDCCH monitoring skipping information indicates the terminal to skip the PDCCH monitoring on the secondary component carrier. After receiving the PDCCH monitoring skipping information, the terminal will skip the PDCCH monitoring on the secondary component carrier according to the PDCCH monitoring skipping information.

In an embodiment, a duration of skipping the PDCCH monitoring on the secondary component carrier may be determined according to a power saving requirement parameter. For example, if the power saving requirement parameter is greater than a parameter threshold, it is determined that the duration of skipping the PDCCH monitoring on the secondary component carrier is less than a duration threshold; or if the power saving requirement parameter is less than the parameter threshold, it is determined that the duration of skipping the PDCCH monitoring on the secondary component carrier is greater than the duration threshold. In this way, a duration of the PDCCH monitoring on the secondary component carrier may be adapted to the power saving requirement parameter.

In an embodiment, the duration of skipping the PDCCH monitoring on the carrier may be determined based on several time units. For example, the time unit is ms or slot. Skipping for X time units means skipping for X ms or X slots. The slot may be determined according to a subcarrier spacing.

In an embodiment, the base station sends the PDCCH monitoring skipping information to the terminal, and the PDCCH monitoring skipping information indicates the terminal to skip the PDCCH monitoring on a plurality of secondary component carriers. After receiving the PDCCH monitoring skipping information, the terminal will skip the PDCCH monitoring on the plurality of secondary component carriers according to the PDCCH monitoring skipping information. Here, the plurality of secondary component carriers may be some or all of the secondary component carriers supported by the terminal.

In an embodiment, the base station sends the PDCCH monitoring skipping information to the terminal, and the PDCCH monitoring skipping information indicates the terminal to skip the PDCCH monitoring on the secondary component carrier in a secondary component carrier group. After receiving the PDCCH monitoring skipping information, the terminal will skip the PDCCH monitoring on the secondary component carrier in the secondary component carrier group according to the PDCCH monitoring skipping information. Here, there may be a plurality of secondary component carrier groups, and the plurality of secondary component carrier groups may be some or all of the secondary component carrier groups supported by the terminal. A secondary component carrier group may include a plurality of secondary component carriers.

In an embodiment, in a dual DRX scenario, the secondary component carrier in FR1 and the secondary component carrier in FR2 cannot be configured in the same secondary component carrier group.

In an embodiment, in a dual DRX scenario, the secondary component carrier in FR1 and the secondary component carrier in FR2 cannot be configured in the same DRX group.

In an embodiment, the base station sends the PDCCH monitoring skipping information to the terminal, and the PDCCH monitoring skipping information indicates the terminal to skip the PDCCH monitoring on the secondary component carrier. In this case, a timer for skipping the monitoring may be started on the secondary component carrier, and a duration of the timer for skipping the monitoring is the duration of skipping the monitoring. In an embodiment, the base station sends the PDCCH monitoring skipping information to the terminal, and the PDCCH monitoring skipping information indicates the terminal to skip the PDCCH monitoring on the secondary component carrier. After the terminal receives the PDCCH monitoring skipping information, if the terminal subsequently needs to initiate a random access process on the secondary component carrier, since a random access response (RAR) needs to be monitored on the primary component carrier, the process of skipping the PDCCH monitoring on the secondary component carrier will not be terminated in advance. That is, the skipping process will not be terminated in advance to enter an active state. That is, the timer for skipping the monitoring will not be stopped or restarted. Because the terminal will not skip the PDCCH monitoring on the primary component carrier at this time, that is, the monitoring on the primary component carrier will not be affected.

In an embodiment, if the PDCCH monitoring skipping information indicates the terminal to skip the PDCCH monitoring on the secondary component carrier in the secondary component carrier group, an effective duration of the PDCCH monitoring skipping information may be determined according to a minimum subcarrier spacing of a BWP configured by an effective secondary component carrier group. In an embodiment, if the PDCCH monitoring skipping information indicates the terminal to skip the PDCCH monitoring on the secondary component carrier in the secondary component carrier group, an effective duration of the PDCCH monitoring skipping information may be determined according to a subcarrier spacing of a currently working BWP. It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, a starting point of the effective duration may be a time point when the terminal receives the PDCCH monitoring skipping information.

In an embodiment, the base station sends the PDCCH monitoring skipping information to the terminal, and the PDCCH monitoring skipping information indicates the terminal to skip the PDCCH monitoring on the primary component carrier. After receiving the PDCCH monitoring skipping information, the terminal will skip the PDCCH monitoring on the primary component carrier according to the PDCCH monitoring skipping information. It should be noted that the terminal will not skip the PDCCH monitoring on the secondary component carrier according to the PDCCH monitoring skipping information. That is, the monitoring on the secondary component carrier will not be affected.

In an embodiment, if the PDCCH monitoring skipping information indicates the terminal to skip the PDCCH monitoring on the primary component carrier, and it is determined that the terminal will not skip the PDCCH monitoring on the secondary component carrier, the effective duration of the PDCCH monitoring skipping information may be determined according to a minimum subcarrier spacing of all BWPs configured by the primary component carrier. In an embodiment, if the PDCCH monitoring skipping information indicates the terminal to skip the PDCCH monitoring on the primary component carrier, and it is determined that the terminal will not skip the PDCCH monitoring on the secondary component carrier, the effective duration of the PDCCH monitoring skipping information may be determined according to a subcarrier spacing of a BWP currently activated on the primary component carrier. It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, the starting point of the effective duration may be the time point when the terminal receives the PDCCH monitoring skipping information.

In an embodiment, the base station sends the PDCCH monitoring skipping information to the terminal, and the PDCCH monitoring skipping information indicates the terminal to skip the PDCCH monitoring on the primary component carrier. After receiving the PDCCH monitoring skipping information, the terminal will skip the PDCCH monitoring on the primary component carrier according to the PDCCH monitoring skipping information. It should be noted that, the terminal will also skip the PDCCH monitoring on the secondary component carrier according to the PDCCH monitoring skipping information. That is, the monitoring on the secondary component carrier will be affected.

In an embodiment, the base station sends the PDCCH monitoring skipping information to the terminal, and the PDCCH monitoring skipping information indicates the terminal to skip the PDCCH monitoring on the primary component carrier, and at this time, a timer for skipping the monitoring will be started on the primary component carrier. If further, the terminal will also skip the PDCCH monitoring on the secondary component carrier according to the PDCCH monitoring skipping information, that is, the monitoring on the secondary component carrier will be affected, and a timer for skipping the monitoring will also be started on the secondary component carrier.

That is, it can be understood as that skipping or continuing the monitoring on the primary component carrier is valid for the entire terminal, and the terminal will skip or continue the monitoring on all carriers. The behavior may be specified in a protocol.

In this case, the terminal will handle the timer on the secondary component carrier as follows.

If the timer for skipping the monitoring has been started on the secondary component carrier, the timer may be restarted, and its duration is determined according to the duration of skipping the monitoring on the primary component carrier. For example, the timer for skipping the monitoring on the secondary component carrier has been set as 3 s first, and after it runs for 1 s, if the duration of skipping the monitoring on the primary component carrier is 4 s, the monitoring on the secondary component carrier is skipped for 4 s according to the duration of skipping the monitoring on the primary component carrier. Similarly, the timer for the secondary component carrier may also be affected by PDCCH continuous monitoring information on the primary component carrier. For example, the timer for skipping the monitoring on the secondary component carrier has been set as 3 s first, and after it runs for 1 s, if an indication on the primary component carrier is received, which indicates to continue the monitoring on the predetermined carrier, the timer that is running is stopped, and the monitoring is resumed.

If further, the terminal will also skip the PDCCH monitoring on the secondary component carrier according to the PDCCH monitoring skipping information, that is, the monitoring on the secondary component carrier will be affected, in this case, a timer for skipping the monitoring will also be started on the secondary component carrier. This timer continues to run after running according to the duration of skipping the monitoring on the primary component carrier. For example, the timer for skipping the monitoring on the secondary component carrier has been set as 3 s first, and after it runs for 1 s, if the duration of skipping the monitoring on the primary component carrier is 4 s, the timer runs for 4 s first according to the duration of skipping the monitoring on the primary component carrier, and then the timer continues to run for the remaining 2 s.

In an embodiment, if the PDCCH monitoring skipping information indicates the terminal to skip the PDCCH monitoring on the primary component carrier, and it is determined that the terminal will skip the PDCCH monitoring on the secondary component carrier, the effective duration of the PDCCH monitoring skipping information may be determined according to a minimum subcarrier spacing of all BWPs configured by the primary component carrier or a minimum subcarrier spacing of a BWP activated by the terminal on the primary component carrier. It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, the starting point of the effective duration may be the time point when the terminal receives the PDCCH monitoring skipping information.

In an embodiment, if the PDCCH monitoring skipping information indicates the terminal to skip the PDCCH monitoring on the primary component carrier, and it is determined that the terminal will skip the PDCCH monitoring on the secondary component carrier, the effective duration of the PDCCH monitoring skipping information may be determined according to a minimum subcarrier spacing of all BWPs configured by the primary component carrier and the secondary component carrier or a minimum subcarrier spacing of a BWP activated by the terminal on the primary component carrier. As an embodiment, a timer for skipping the monitoring is started on the primary component carrier. It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, the starting point of the effective duration may be the time point when the terminal receives the PDCCH monitoring skipping information.

In an embodiment, if the PDCCH monitoring skipping information indicates the terminal to skip the PDCCH monitoring on the primary component carrier, and a random access process is initiated on the primary component carrier, the terminal will terminate skipping the PDCCH monitoring on the primary component carrier in advance. That is, the PDCCH skipping will be affected. The timer for skipping the monitoring started on the primary component carrier will be stopped, and the primary component carrier will enter the active time or active state.

In an embodiment, if the PDCCH monitoring skipping information indicates the terminal to skip the PDCCH monitoring on the secondary component carrier, and a random access process is initiated on the secondary component carrier, the terminal will terminate skipping the PDCCH monitoring on the primary component carrier in advance. That is, the PDCCH skipping will be affected. Here, terminating skipping the PDCCH monitoring on the primary component carrier in advance may be stopping the timer set for the primary component carrier in advance.

In an embodiment, if the PDCCH monitoring skipping information indicates the terminal to skip the PDCCH monitoring on the primary component carrier and the secondary component carrier, and a random access process is initiated on the secondary component carrier, the terminal will terminate skipping the PDCCH monitoring on the primary component carrier in advance. That is, the PDCCH skipping will be affected. Here, terminating skipping the PDCCH monitoring on the primary component carrier in advance may be stopping the timer set for the primary component carrier in advance.

In an embodiment, if the PDCCH monitoring skipping information indicates the terminal to skip the PDCCH monitoring on the secondary component carrier, and a random access process is initiated on the secondary component carrier, the terminal will terminate skipping the PDCCH monitoring on the primary component carrier and the secondary component carrier in advance. That is, the PDCCH skipping will be affected. Here, terminating skipping the PDCCH monitoring on the primary component carrier and/or the secondary component carrier in advance may be stopping the timer set for the primary component carrier and/or the secondary component carrier in advance.

In an embodiment, the base station receives auxiliary information sent by the terminal, and the auxiliary information is used to assist the base station in sending the PDCCH monitoring skipping information to the terminal.

In an embodiment, the base station receives from the terminal the auxiliary information that the monitoring skipping is expected. For example, the auxiliary information indicates a number of secondary component carrier groups on which the monitoring skipping is expected to be performed. For example, the auxiliary information indicates that both the primary component carrier and the secondary component carrier are expected to be dormant.

In an embodiment, the base station receives the auxiliary information reported by the terminal, which indicates a monitoring skipping capability of the terminal. For example, the auxiliary information indicates supporting or not supporting the monitoring skipping; and/or the auxiliary information indicates supporting or not supporting the monitoring skipping on the secondary component carrier of the carrier aggregation; and/or the auxiliary information indicates supporting or not supporting the monitoring skipping on the primary component carrier and the secondary component carrier.

In embodiments of the present disclosure, the physical downlink control channel (PDCCH) monitoring skipping information is sent to the terminal, the PDCCH monitoring skipping information indicates the terminal to skip the PDCCH monitoring on the predetermined carrier; and the predetermined carrier includes at least one of the primary component carrier or the secondary component carrier. In this way, since the PDCCH monitoring skipping information indicates the terminal to skip the PDCCH monitoring on the primary component carrier and/or the secondary component carrier, the terminal can determine to monitor or not to monitor the PDCCH on the primary component carrier and/or the secondary component carrier according to the PDCCH monitoring skipping information, which can save power and increase the battery life of the terminal, as compared with a mode in which the PDCCH monitoring is always needed on the primary component carrier and/or the secondary component carrier.

It should be noted that those skilled in the art can understand that the methods according to embodiments of the present disclosure may be performed separately or in combination with some methods according to other embodiments of the present disclosure or other methods in the related art.

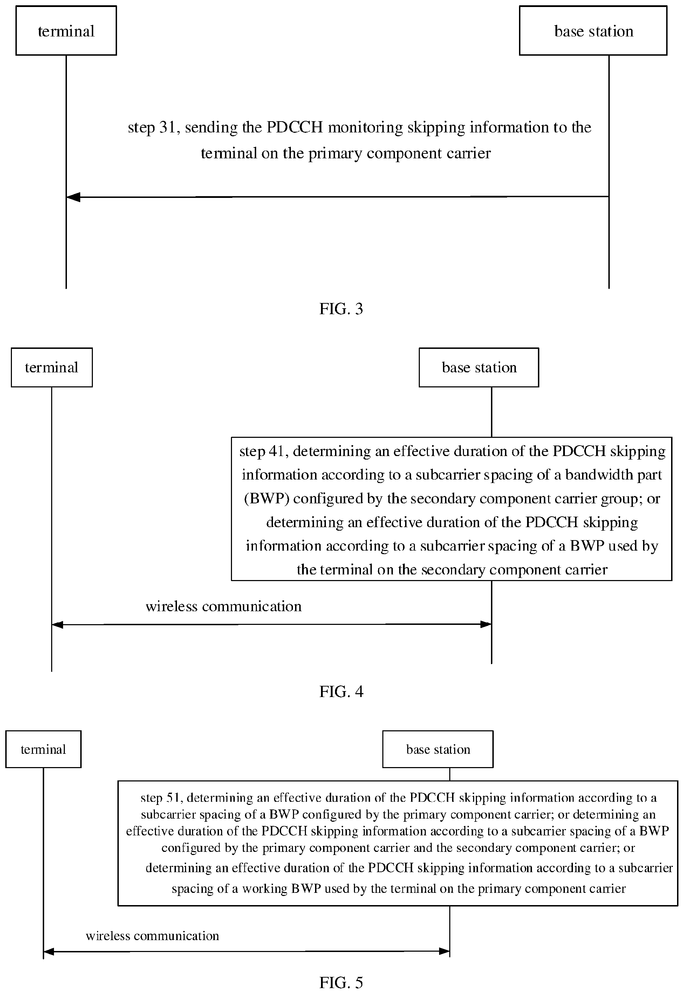

As shown in FIG. 3, embodiments of the present disclosure provide a method for skipping monitoring. The method is performed by a base station, and includes a following step.

In step 31, the PDCCH monitoring skipping information is sent to the terminal on the primary component carrier.

Here, the PDCCH monitoring skipping information indicates the terminal to skip a PDCCH monitoring on a predetermined carrier; and the predetermined carrier includes at least one of a primary component carrier or a secondary component carrier.

In an embodiment, the base station sends the PDCCH monitoring skipping information to the terminal on the primary component carrier, and the PDCCH monitoring skipping information indicates the terminal to skip the PDCCH monitoring on the predetermined carrier. Here, the primary component carrier may be a Pcell or a Pscell. After receiving the PDCCH monitoring skipping information, the terminal will skip the PDCCH monitoring on the predetermined carrier.

It should be noted that those skilled in the art can understand that the methods according to embodiments of the present disclosure may be performed separately or in combination with some methods according to other embodiments of the present disclosure or other methods in the related art.

In an embodiment, the predetermined carrier is the secondary component carrier; and the PDCCH monitoring skipping information indicates: at least one secondary component carrier; and/or at least one secondary component carrier group. The secondary component carrier group includes a plurality of secondary component carriers in the same frequency range (FR).

In an embodiment, the base station sends the PDCCH monitoring skipping information to the terminal, and the PDCCH monitoring skipping information indicates the terminal to skip the PDCCH monitoring on at least one secondary component carrier. After receiving the PDCCH monitoring skipping information, the terminal will skip the PDCCH monitoring on the at least one secondary component carrier according to the PDCCH monitoring skipping information. Here, the at least one secondary component carrier may be some or all of the secondary component carriers supported by the terminal.

In an embodiment, the base station sends the PDCCH monitoring skipping information to the terminal, and the PDCCH monitoring skipping information indicates the terminal to skip the PDCCH monitoring on the secondary component carrier in at least one secondary component carrier group. After receiving the PDCCH monitoring skipping information, the terminal will skip the PDCCH monitoring on the secondary component carrier in the at least one secondary component carrier group according to the PDCCH monitoring skipping information. Here, the at least one secondary component carrier group may be some or all of the secondary component carrier groups supported by the terminal. A secondary component carrier group may include a plurality of secondary component carriers.

In an embodiment, the predetermined carrier is the secondary component carrier; the terminal initiates a random access process on the secondary component carrier, and the PDCCH monitoring skipping information indicates the terminal not to terminate skipping the PDCCH monitoring on the secondary component carrier in advance.

In an embodiment, the base station sends the PDCCH monitoring skipping information to the terminal, and the PDCCH monitoring skipping information indicates the terminal to skip the PDCCH monitoring on the secondary component carrier. After the terminal receives the PDCCH monitoring skipping information, the terminal initiates a random access process on the secondary component carrier and does not terminate skipping the PDCCH monitoring on the secondary component carrier in advance.

In an embodiment, the base station sends the PDCCH monitoring skipping information to the terminal, and the PDCCH monitoring skipping information indicates the terminal to skip the PDCCH monitoring on the secondary component carrier. After the terminal receives the PDCCH monitoring skipping information, the terminal initiates a random access process on the secondary component carrier and does not terminate skipping the PDCCH monitoring on the secondary component carrier in advance. Here, since an RAR is monitored on the primary component carrier, the terminal will not terminate skipping the PDCCH monitoring on the secondary component carrier in advance.

As shown in FIG. 4, embodiments of the present disclosure provide a method for skipping monitoring. The method is performed by a base station, and includes a following step.

In step 41, an effective duration of the PDCCH monitoring skipping information is determined according to a subcarrier spacing of a bandwidth part (BWP) configured by the secondary component carrier group; or an effective duration of the PDCCH monitoring skipping information is determined according to a subcarrier spacing of a BWP used by the terminal on the secondary component carrier.

In an embodiment, if the PDCCH monitoring skipping information indicates the terminal to skip the PDCCH monitoring on the secondary component carrier in a secondary component carrier group, the effective duration of the PDCCH monitoring skipping information may be determined according to a minimum subcarrier spacing of a BWP configured by an effective secondary component carrier group. It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, the starting point of the effective duration may be the time point when the terminal receives the PDCCH monitoring skipping information.

In an embodiment, if the PDCCH monitoring skipping information indicates the terminal to skip the PDCCH monitoring on the secondary component carrier in the secondary component carrier group, the effective duration of the PDCCH monitoring skipping information may be determined according to a subcarrier spacing of a BWP used by the terminal on the secondary component carrier. It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, the starting point of the effective duration may be the time point when the terminal receives the PDCCH monitoring skipping information.

It should be noted that those skilled in the art can understand that the methods according to embodiments of the present disclosure may be performed separately or in combination with some methods according to other embodiments of the present disclosure or other methods in the related art.

In an embodiment, the predetermined carrier is the primary component carrier or the secondary component carrier; and the PDCCH monitoring skipping information indicates: skipping the PDCCH monitoring on the primary component carrier and performing the PDCCH monitoring on the secondary component carrier; or skipping the PDCCH monitoring on both the primary component carrier and the secondary component carrier.

In an embodiment, the base station sends the PDCCH monitoring skipping information to the terminal, and the PDCCH monitoring skipping information indicates the terminal to skip the PDCCH monitoring on the primary component carrier. After receiving the PDCCH monitoring skipping information, the terminal will skip the PDCCH monitoring on the primary component carrier and continue the PDCCH monitoring on the secondary component carrier according to the PDCCH monitoring skipping information. It should be noted that the terminal will not skip the PDCCH monitoring on the secondary component carrier according to the PDCCH monitoring skipping information. That is, the monitoring on the secondary component carrier will not be affected.

In an embodiment, the base station sends the PDCCH monitoring skipping information to the terminal, and the PDCCH monitoring skipping information indicates the terminal to skip the PDCCH monitoring on the primary component carrier. After receiving the PDCCH monitoring skipping information, the terminal will skip the PDCCH monitoring on the primary component carrier and skip the PDCCH monitoring on the secondary component carrier according to the PDCCH monitoring skipping information. It should be noted that, the terminal will also skip the PDCCH monitoring on the secondary component carrier according to the PDCCH monitoring skipping information. That is, the monitoring on the secondary component carrier will be affected.

It should be noted that those skilled in the art can understand that the methods according to embodiments of the present disclosure may be performed separately or in combination with some methods according to other embodiments of the present disclosure or other methods in the related art.

In an embodiment, a duration of skipping the PDCCH monitoring on the secondary component carrier is determined according to a duration of skipping the PDCCH monitoring on the primary component carrier.

In an embodiment, the base station determines the duration of skipping the PDCCH monitoring on the secondary component carrier according to the duration of skipping the PDCCH monitoring on the primary component carrier.

Here, the duration of skipping the PDCCH monitoring on the primary component carrier is the same as the duration of skipping the PDCCH monitoring on the secondary component carri er.

As shown in FIG. 5, embodiments of the present disclosure provide a method for skipping monitoring. The method is performed by a base station, and includes a following step.

In step 51, an effective duration of the PDCCH monitoring skipping information is determined according to a subcarrier spacing of a BWP configured by the primary component carrier; or an effective duration of the PDCCH monitoring skipping information is determined according to a subcarrier spacing of a BWP configured by the primary component carrier and the secondary component carrier; or an effective duration of the PDCCH monitoring skipping information is determined according to a subcarrier spacing of a working BWP used by the terminal on the primary component carrier.

In an embodiment, if the PDCCH monitoring skipping information indicates the terminal to skip the PDCCH monitoring on the primary component carrier, and it is determined that the terminal will skip the PDCCH monitoring on the secondary component carrier, the effective duration of the PDCCH monitoring skipping information may be determined according to a minimum subcarrier spacing of all BWPs configured by the primary component carrier. It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, the starting point of the effective duration may be the time point when the terminal receives the PDCCH monitoring skipping information.

In an embodiment, if the PDCCH monitoring skipping information indicates the terminal to skip the PDCCH monitoring on the primary component carrier, and it is determined that the terminal will skip the PDCCH monitoring on the secondary component carrier, the effective duration of the PDCCH monitoring skipping information may be determined according to a minimum subcarrier spacing of all BWPs configured by the primary component carrier and the secondary component carrier. It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, the starting point of the effective duration may be the time point when the terminal receives the PDCCH monitoring skipping information.

In an embodiment, if the PDCCH monitoring skipping information indicates the terminal to skip the PDCCH monitoring on the primary component carrier, and it is determined that the terminal will skip the PDCCH monitoring on the secondary component carrier, the effective duration of the PDCCH monitoring skipping information may be determined according to a subcarrier spacing of a working BWP used by the terminal on the primary component carrier. It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, the starting point of the effective duration may be the time point when the terminal receives the PDCCH monitoring skipping information.

It should be noted that those skilled in the art can understand that the methods according to embodiments of the present disclosure may be performed separately or in combination with some methods according to other embodiments of the present disclosure or other methods in the related art.

In an embodiment, the PDCCH monitoring skipping information indicates: terminating skipping the PDCCH monitoring on the primary component carrier in advance, with a determination that a random access process is initiated on the primary component carrier; or terminating skipping the PDCCH monitoring on the primary component carrier in advance, with a determination that a random access process is initiated on the secondary component carrier; or terminating skipping the PDCCH monitoring on the primary component carrier and the secondary component carrier in advance, with a determination that a random access process is initiated on the secondary component carrier.

In an embodiment, if the PDCCH monitoring skipping information indicates the terminal to skip the PDCCH monitoring on the primary component carrier, and a random access process is initiated on the primary component carrier, the terminal will terminate skipping the PDCCH monitoring on the primary component carrier in advance. That is, the PDCCH skipping will be affected.

In an embodiment, if the PDCCH monitoring skipping information indicates the terminal to skip the PDCCH monitoring on the secondary component carrier, and a random access process is initiated on the secondary component carrier, the terminal will terminate skipping the PDCCH monitoring on the primary component carrier in advance. That is, the PDCCH skipping will be affected. Here, terminating skipping the PDCCH monitoring on the primary component carrier in advance may be stopping the timer set for the primary component carrier in advance.

In an embodiment, if the PDCCH monitoring skipping information indicates the terminal to skip the PDCCH monitoring on the secondary component carrier, and a random access process is initiated on the secondary component carrier, the terminal will terminate skipping the PDCCH monitoring on the primary component carrier and the secondary component carrier in advance. That is, the PDCCH skipping will be affected. Here, terminating skipping the PDCCH monitoring on the primary component carrier and/or the secondary component carrier in advance may be stopping the timer set for the primary component carrier and/or the secondary component carrier in advance.

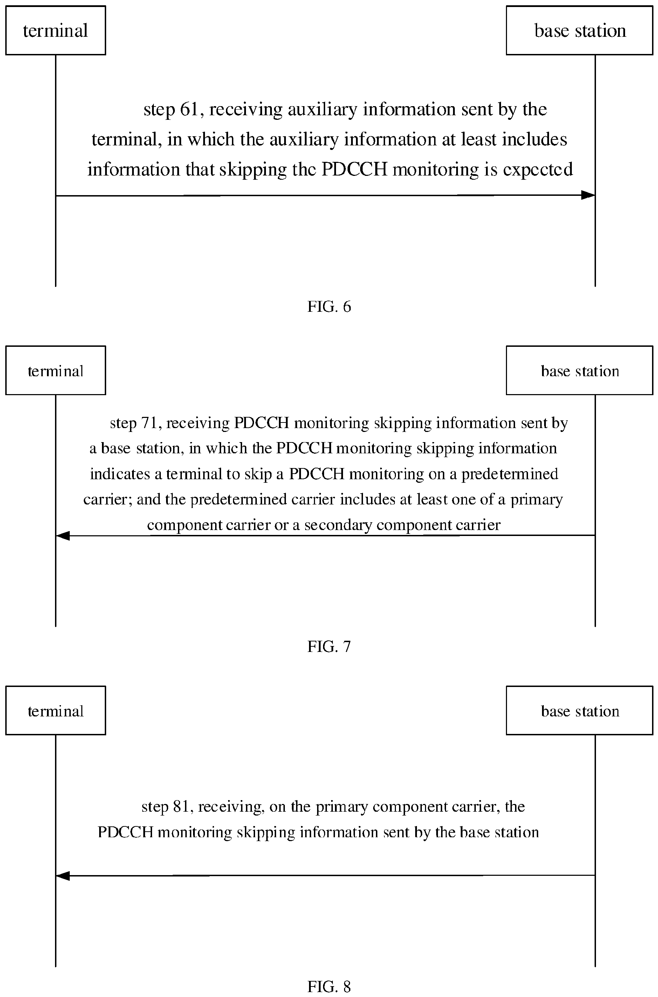

As shown in FIG. 6, embodiments of the present disclosure provide a method for skipping monitoring. The method is performed by a base station, and includes a following step.

In step 61: auxiliary information sent by the terminal is received, and the auxiliary information at least includes information that skipping the PDCCH monitoring is expected.

In an embodiment, the auxiliary information includes one or more of: a number of secondary cell groups; information of the predetermined carrier; or terminal capability information that skipping the PDCCH monitoring on the predetermined carrier is supported or not supported.

In an embodiment, the base station receives the auxiliary information sent by the terminal, and the auxiliary information is used to assist the base station in sending the PDCCH monitoring skipping information to the terminal.

In an embodiment, the base station receives from the terminal the auxiliary information that the monitoring skipping is expected. For example, the auxiliary information indicates a number of secondary component carrier groups on which the monitoring skipping is expected to be performed. For example, the auxiliary information indicates that both the primary component carrier and the secondary component carrier are expected to be dormant.

In an embodiment, the base station receives the auxiliary information reported by the terminal, which indicates a monitoring skipping capability of the terminal. For example, the auxiliary information indicates supporting or not supporting the monitoring skipping; and/or the auxiliary information indicates supporting or not supporting the monitoring skipping on the secondary component carrier of the carrier aggregation; and/or the auxiliary information indicates supporting or not supporting the monitoring skipping on the primary component carrier and the secondary component carrier.

It should be noted that those skilled in the art can understand that the methods according to embodiments of the present disclosure may be performed separately or in combination with some methods according to other embodiments of the present disclosure or other methods in the related art.

As shown in FIG. 7, embodiments of the present disclosure provide a method for skipping monitoring. The method is performed by a terminal, and the method includes a following step.

In step 71, PDCCH monitoring skipping information sent by a base station is received. The PDCCH monitoring skipping information indicates the terminal to skip a PDCCH monitoring on a predetermined carrier; and the predetermined carrier indicates at least one of a primary component carrier or a secondary component carrier.

Here, the terminal involved in the present disclosure may be, but not limited to, a mobile phone, a wearable device, a vehicle-mounted terminal, a road side unit (RSU), a smart home terminal, an industrial sensing device, and/or a medical device.

The base station involved in the present disclosure may be an access device for the terminal to access a network. Here, the base station may be various types of base stations, for example, a base station of a third-generation mobile communication (3G) network, a base station of a fourth-generation mobile communication (4G) network, a base station of a fifth-generation mobile communication (5G) network, or other evolved base station.

In an embodiment, the base station sends the physical downlink control channel (PDCCH) monitoring skipping information to the terminal. The PDCCH monitoring skipping information indicates the terminal to skip the PDCCH monitoring on the predetermined carrier; and the predetermined carrier indicates at least one of the primary component carrier or the secondary component carrier. After receiving the PDCCH monitoring skipping information sent by the base station, the terminal determines to perform the PDCCH monitoring on the primary component carrier and/or the secondary component carrier according to the PDCCH monitoring skipping information; or determines to skip the PDCCH monitoring on the primary component carrier and/or the secondary component carrier according to the PDCCH monitoring skipping information.

In an embodiment, the base station sends DCI carrying the PDCCH monitoring skipping information to the terminal. After receiving the DCI sent by the base station, the terminal determines to perform the PDCCH monitoring on the primary component carrier and/or the secondary component carrier according to the PDCCH monitoring skipping information carried in the DCI; or determines to skip the PDCCH monitoring on the primary component carrier and/or the secondary component carrier according to the PDCCH monitoring skipping information carried in the DCI.

In an embodiment, the base station sends the PDCCH monitoring skipping information to the terminal on the primary component carrier. The PDCCH monitoring skipping information indicates the terminal to skip the PDCCH monitoring on the predetermined carrier. Here, the primary component carrier may be a Pcell or a Pscell.

It should be noted that the base station may also send DCI carrying PDCCH continuous monitoring information to the terminal. The PDCCH continuous monitoring information indicates the terminal to continue the PDCCH monitoring on the predetermined carrier.

In an embodiment, the predetermined carrier may be specified in a protocol or notified by the network.

In an embodiment, the predetermined carrier specified in the protocol may be all available secondary component carriers.

In an embodiment, the predetermined carrier specified in the protocol may be determined according to a certain DRX group. For example, the predetermined carrier is the primary component carrier or the secondary component carrier on a certain DRX group.

In an embodiment, if the predetermined carrier specified in the protocol is the primary component carrier, all available secondary component carriers also become the predetermined carrier.

In an embodiment, the base station explicitly indicates that the predetermined carrier is the primary component carrier or the secondary component carrier. For example, a Flag indicating identifier may be used, with different values to distinguish the primary component carrier and the secondary component carrier.

In an embodiment, the base station may explicitly indicate a range of the predetermined carri er.

In an embodiment, the base station sends the PDCCH monitoring skipping information to the terminal, and the PDCCH monitoring skipping information indicates the terminal to skip the PDCCH monitoring on the secondary component carrier. After receiving the PDCCH monitoring skipping information, the terminal will skip the PDCCH monitoring on the secondary component carrier according to the PDCCH monitoring skipping information.

In an embodiment, a duration of skipping the PDCCH monitoring on the secondary component carrier may be determined according to a power saving requirement parameter. For example, if the power saving requirement parameter is greater than a parameter threshold, it is determined that the duration of skipping the PDCCH monitoring on the secondary component carrier is less than a duration threshold; or if the power saving requirement parameter is less than the parameter threshold, it is determined that the duration of skipping the PDCCH monitoring on the secondary component carrier is greater than the duration threshold. In this way, a duration of the PDCCH monitoring on the secondary component carrier may be adapted to the power saving requirement parameter.

In an embodiment, the duration of skipping the PDCCH monitoring on the carrier may be determined based on several time units. For example, the time unit is ms or slot. Skipping for X time units means skipping for X ms or X slots. The slot may be determined according to a subcarrier spacing.

In an embodiment, the base station sends the PDCCH monitoring skipping information to the terminal, and the PDCCH monitoring skipping information indicates the terminal to skip the PDCCH monitoring on a plurality of secondary component carriers. After receiving the PDCCH monitoring skipping information, the terminal will skip the PDCCH monitoring on the plurality of secondary component carriers according to the PDCCH monitoring skipping information. Here, the plurality of secondary component carriers may be some or all of the secondary component carriers supported by the terminal.

In an embodiment, the base station sends the PDCCH monitoring skipping information to the terminal, and the PDCCH monitoring skipping information indicates the terminal to skip the PDCCH monitoring on the secondary component carrier in a secondary component carrier group. After receiving the PDCCH monitoring skipping information, the terminal will skip the PDCCH monitoring on the secondary component carrier in the secondary component carrier group according to the PDCCH monitoring skipping information. Here, there may be a plurality of secondary component carrier groups, and the plurality of secondary component carrier groups may be some or all of the secondary component carrier groups supported by the terminal. A secondary component carrier group may include a plurality of secondary component carriers.

In an embodiment, in a dual DRX scenario, the secondary component carrier in FR1 and the secondary component carrier in FR2 cannot be configured in the same secondary component carrier group.

In an embodiment, in a dual DRX scenario, the secondary component carrier in FR1 and the secondary component carrier in FR2 cannot be configured in the same DRX group.

In an embodiment, the base station sends the PDCCH monitoring skipping information to the terminal, and the PDCCH monitoring skipping information indicates the terminal to skip the PDCCH monitoring on the secondary component carrier. In this case, a timer for skipping the monitoring may be started on the secondary component carrier, and a duration of the timer for skipping the monitoring is the duration of skipping the monitoring.

In an embodiment, the base station sends the PDCCH monitoring skipping information to the terminal, and the PDCCH monitoring skipping information indicates the terminal to skip the PDCCH monitoring on the secondary component carrier. After the terminal receives the PDCCH monitoring skipping information, if the terminal subsequently needs to initiate a random access process on the secondary component carrier, since a random access response (RAR) needs to be monitored on the primary component carrier, the process of skipping the PDCCH monitoring on the secondary component carrier will not be terminated in advance. That is, the skipping process will not be terminated in advance to enter an active state. That is, the timer for skipping the monitoring will not be stopped or restarted. Because the terminal will not skip the PDCCH monitoring on the primary component carrier at this time, that is, the monitoring on the primary component carrier will not be affected.

In an embodiment, if the PDCCH monitoring skipping information indicates the terminal to skip the PDCCH monitoring on the secondary component carrier in the secondary component carrier group, an effective duration of the PDCCH monitoring skipping information may be determined according to a minimum subcarrier spacing of a BWP configured by an effective secondary component carrier group.

In an embodiment, if the PDCCH monitoring skipping information indicates the terminal to skip the PDCCH monitoring on the secondary component carrier in the secondary component carrier group, an effective duration of the PDCCH monitoring skipping information may be determined according to a subcarrier spacing of a currently working BWP.

It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, a starting point of the effective duration may be a time point when the terminal receives the PDCCH monitoring skipping information.

In an embodiment, the base station sends the PDCCH monitoring skipping information to the terminal, and the PDCCH monitoring skipping information indicates the terminal to skip the PDCCH monitoring on the primary component carrier. After receiving the PDCCH monitoring skipping information, the terminal will skip the PDCCH monitoring on the primary component carrier according to the PDCCH monitoring skipping information. It should be noted that the terminal will not skip the PDCCH monitoring on the secondary component carrier according to the PDCCH monitoring skipping information. That is, the monitoring on the secondary component carrier will not be affected.

In an embodiment, if the PDCCH monitoring skipping information indicates the terminal to skip the PDCCH monitoring on the primary component carrier, and it is determined that the terminal will not skip the PDCCH monitoring on the secondary component carrier, the effective duration of the PDCCH monitoring skipping information may be determined according to a minimum subcarrier spacing of all BWPs configured by the primary component carrier.

In an embodiment, if the PDCCH monitoring skipping information indicates the terminal to skip the PDCCH monitoring on the primary component carrier, and it is determined that the terminal will not skip the PDCCH monitoring on the secondary component carrier, the effective duration of the PDCCH monitoring skipping information may be determined according to a subcarrier spacing of a BWP currently activated on the primary component carrier.

It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, the starting point of the effective duration may be the time point when the terminal receives the PDCCH monitoring skipping information.

In an embodiment, the base station sends the PDCCH monitoring skipping information to the terminal, and the PDCCH monitoring skipping information indicates the terminal to skip the PDCCH monitoring on the primary component carrier. After receiving the PDCCH monitoring skipping information, the terminal will skip the PDCCH monitoring on the primary component carrier according to the PDCCH monitoring skipping information. It should be noted that, the terminal will also skip the PDCCH monitoring on the secondary component carrier according to the PDCCH monitoring skipping information. That is, the monitoring on the secondary component carrier will be affected.

In an embodiment, the base station sends the PDCCH monitoring skipping information to the terminal, and the PDCCH monitoring skipping information indicates the terminal to skip the PDCCH monitoring on the primary component carrier, and at this time, a timer for skipping the monitoring will be started on the primary component carrier. If further, the terminal will also skip the PDCCH monitoring on the secondary component carrier according to the PDCCH monitoring skipping information, that is, the monitoring on the secondary component carrier will be affected, and a timer for skipping the monitoring will also be started on the secondary component carrier.

That is, it can be understood as that skipping or continuing the monitoring on the primary component carrier is valid for the entire terminal, and the terminal will skip or continue the monitoring on all carriers. The behavior may be specified in a protocol.

In this case, the terminal will handle the timer on the secondary component carrier as follows.

If the timer for skipping the monitoring has been started on the secondary component carrier, the timer may be restarted, and its duration is determined according to the duration of skipping the monitoring on the primary component carrier. For example, the timer for skipping the monitoring on the secondary component carrier has been set as 3 s first, and after it runs for 1 s, if the duration of skipping the monitoring on the primary component carrier is 4 s, the monitoring on the secondary component carrier is skipped for 4 s according to the duration of skipping the monitoring on the primary component carrier. Similarly, the timer for the secondary component carrier may also be affected by PDCCH continuous monitoring information on the primary component carrier. For example, the timer for skipping the monitoring on the secondary component carrier has been set as 3 s first, and after it runs for 1 s, if an indication on the primary component carrier is received, which indicates to continue the monitoring on the predetermined carrier, the timer that is running is stopped, and the monitoring is resumed.

If further, the terminal will also skip the PDCCH monitoring on the secondary component carrier according to the PDCCH monitoring skipping information, that is, the monitoring on the secondary component carrier will be affected, in this case, a timer for skipping the monitoring will also be started on the secondary component carrier. This timer continues to run after running according to the duration of skipping the monitoring on the primary component carrier. For example, the timer for skipping the monitoring on the secondary component carrier has been set as 3 s first, and after it runs for 1 s, if the duration of skipping the monitoring on the primary component carrier is 4 s, the timer runs for 4 s first according to the duration of skipping the monitoring on the primary component carrier, and then the timer continues to run for the remaining 2 s.

In an embodiment, if the PDCCH monitoring skipping information indicates the terminal to skip the PDCCH monitoring on the primary component carrier, and it is determined that the terminal will skip the PDCCH monitoring on the secondary component carrier, the effective duration of the PDCCH monitoring skipping information may be determined according to a minimum subcarrier spacing of all BWPs configured by the primary component carrier or a minimum subcarrier spacing of a BWP activated by the terminal on the primary component carrier. It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, the starting point of the effective duration may be the time point when the terminal receives the PDCCH monitoring skipping information.

In an embodiment, if the PDCCH monitoring skipping information indicates the terminal to skip the PDCCH monitoring on the primary component carrier, and it is determined that the terminal will skip the PDCCH monitoring on the secondary component carrier, the effective duration of the PDCCH monitoring skipping information may be determined according to a minimum subcarrier spacing of all BWPs configured by the primary component carrier and the secondary component carrier or a minimum subcarrier spacing of a BWP activated by the terminal on the primary component carrier. As an embodiment, a timer for skipping the monitoring is started on the primary component carrier. It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, the starting point of the effective duration may be the time point when the terminal receives the PDCCH monitoring skipping information.

In an embodiment, if the PDCCH monitoring skipping information indicates the terminal to skip the PDCCH monitoring on the primary component carrier, and a random access process is initiated on the primary component carrier, the terminal will terminate skipping the PDCCH monitoring on the primary component carrier in advance. That is, the PDCCH skipping will be affected. The timer for skipping the monitoring started on the primary component carrier will be stopped, and the primary component carrier will enter the active time or active state.

In an embodiment, if the PDCCH monitoring skipping information indicates the terminal to skip the PDCCH monitoring on the secondary component carrier, and a random access process is initiated on the secondary component carrier, the terminal will terminate skipping the PDCCH monitoring on the primary component carrier in advance. That is, the PDCCH skipping will be affected. Here, terminating skipping the PDCCH monitoring on the primary component carrier in advance may be stopping the timer set for the primary component carrier in advance.

In an embodiment, if the PDCCH monitoring skipping information indicates the terminal to skip the PDCCH monitoring on the primary component carrier and the secondary component carrier, and a random access process is initiated on the secondary component carrier, the terminal will terminate skipping the PDCCH monitoring on the primary component carrier in advance. That is, the PDCCH skipping will be affected. Here, terminating skipping the PDCCH monitoring on the primary component carrier in advance may be stopping the timer set for the primary component carrier in advance.

In an embodiment, if the PDCCH monitoring skipping information indicates the terminal to skip the PDCCH monitoring on the secondary component carrier, and a random access process is initiated on the secondary component carrier, the terminal will terminate skipping the PDCCH monitoring on the primary component carrier and the secondary component carrier in advance. That is, the PDCCH skipping will be affected. Here, terminating skipping the PDCCH monitoring on the primary component carrier and/or the secondary component carrier in advance may be stopping the timer set for the primary component carrier and/or the secondary component carrier in advance.

In an embodiment, the base station receives auxiliary information sent by the terminal, and the auxiliary information is used to assist the base station in sending the PDCCH monitoring skipping information to the terminal.

In an embodiment, the base station receives from the terminal the auxiliary information that the monitoring skipping is expected. For example, the auxiliary information indicates a number of secondary component carrier groups on which the monitoring skipping is expected to be performed. For example, the auxiliary information indicates that both the primary component carrier and the secondary component carrier are expected to be dormant.

In an embodiment, the base station receives the auxiliary information reported by the terminal, which indicates a monitoring skipping capability of the terminal. For example, the auxiliary information indicates supporting or not supporting the monitoring skipping; and/or the auxiliary information indicates supporting or not supporting the monitoring skipping on the secondary component carrier of the carrier aggregation; and/or the auxiliary information indicates supporting or not supporting the monitoring skipping on the primary component carrier and the secondary component carrier.

It should be noted that those skilled in the art can understand that the methods according to embodiments of the present disclosure may be performed separately or in combination with some methods according to other embodiments of the present disclosure or other methods in the related art.

As shown in FIG. 8, embodiments of the present disclosure provide a method for skipping monitoring. The method is performed by a terminal, and includes a following step.

In step 81, the PDCCH monitoring skipping information sent by the base station is received on the primary component carrier.

Here, the PDCCH monitoring skipping information indicates the terminal to skip a PDCCH monitoring on a predetermined carrier; and the predetermined carrier includes at least one of a primary component carrier or a secondary component carrier.

In an embodiment, the terminal receives, on the primary component carrier, the PDCCH monitoring skipping information sent by the base station, and the PDCCH monitoring skipping information indicates the terminal to skip the PDCCH monitoring on the predetermined carrier. Here, the primary component carrier may be a Pcell or a Pscell. After receiving the PDCCH monitoring skipping information, the terminal will skip the PDCCH monitoring on the predetermined carrier.

It should be noted that those skilled in the art can understand that the methods according to embodiments of the present disclosure may be performed separately or in combination with some methods according to other embodiments of the present disclosure or other methods in the related art.

In an embodiment, the predetermined carrier is the secondary component carrier; and the PDCCH monitoring skipping information indicates: at least one secondary component carrier; and/or at least one secondary component carrier group. The secondary component carrier group includes a plurality of secondary component carriers in the same frequency range (FR).

In an embodiment, the base station sends the PDCCH monitoring skipping information to the terminal, and the PDCCH monitoring skipping information indicates the terminal to skip the PDCCH monitoring on at least one secondary component carrier. After receiving the PDCCH monitoring skipping information, the terminal will skip the PDCCH monitoring on the at least one secondary component carrier according to the PDCCH monitoring skipping information. Here, the at least one secondary component carrier may be some or all of the secondary component carriers supported by the terminal.

In an embodiment, the base station sends the PDCCH monitoring skipping information to the terminal, and the PDCCH monitoring skipping information indicates the terminal to skip the PDCCH monitoring on the secondary component carrier in at least one secondary component carrier group. After receiving the PDCCH monitoring skipping information, the terminal will skip the PDCCH monitoring on the secondary component carrier in the at least one secondary component carrier group according to the PDCCH monitoring skipping information. Here, the at least one secondary component carrier group may be some or all of the secondary component carrier groups supported by the terminal. A secondary component carrier group may include a plurality of secondary component carriers.

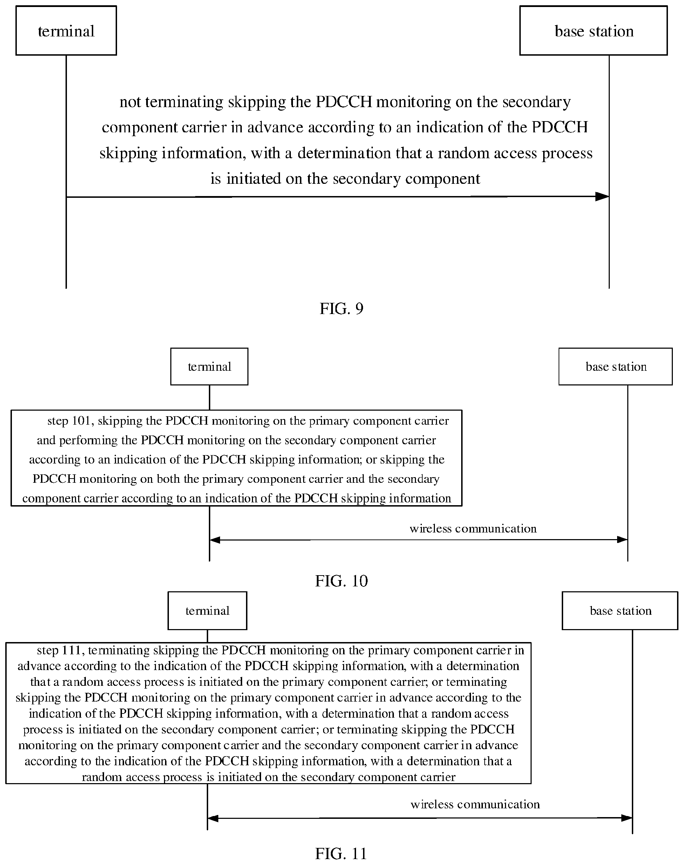

As shown in FIG. 9, embodiments of the present disclosure provide a method for skipping monitoring. The method is performed by a terminal, and includes a following step.

In step 91, skipping the PDCCH monitoring on the secondary component carrier is not terminated in advance according to an indication of the PDCCH monitoring skipping information, with a determination that a random access process is initiated on the secondary component. In an embodiment, the PDCCH monitoring skipping information indicates: not terminating skipping the PDCCH monitoring on the secondary component carrier in advance, when a random access process is initiated on the secondary component. In an embodiment, the base station sends the PDCCH monitoring skipping information to the terminal, and the PDCCH monitoring skipping information indicates the terminal to skip the PDCCH monitoring on the secondary component carrier. After receiving the PDCCH monitoring skipping information, the terminal does not terminate skipping the PDCCH monitoring on the secondary component carrier in advance when a random access process is initiated on the secondary component carrier.

In an embodiment, the base station sends the PDCCH monitoring skipping information to the terminal, and the PDCCH monitoring skipping information indicates the terminal to skip the PDCCH monitoring on the secondary component carrier. After receiving the PDCCH monitoring skipping information, the terminal does not terminate skipping the PDCCH monitoring on the secondary component carrier in advance when a random access process is initiated on the secondary component carrier. Here, since an RAR is monitored on the primary component carrier, the terminal will not terminate the PDCCH monitoring on the secondary component carrier in advance, that is, the monitoring on the primary component carrier is not affected.

It should be noted that those skilled in the art can understand that the methods according to embodiments of the present disclosure may be performed separately or in combination with some methods according to other embodiments of the present disclosure or other methods in the related art.

In an embodiment, an effective duration of the PDCCH monitoring skipping information is determined according to a subcarrier spacing of a bandwidth part (BWP) configured by the secondary component carrier group; or an effective duration of the PDCCH monitoring skipping information is determined according to a subcarrier spacing of a BWP used by the terminal on the secondary component carrier.

In an embodiment, if the PDCCH monitoring skipping information indicates the terminal to skip the PDCCH monitoring on the secondary component carrier in a secondary component carrier group, the effective duration of the PDCCH monitoring skipping information may be determined according to a minimum subcarrier spacing of a BWP configured by an effective secondary component carrier group. It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, the starting point of the effective duration may be the time point when the terminal receives the PDCCH monitoring skipping information.

In an embodiment, if the PDCCH monitoring skipping information indicates the terminal to skip the PDCCH monitoring on the secondary component carrier in the secondary component carrier group, the effective duration of the PDCCH monitoring skipping information may be determined according to a subcarrier spacing of a BWP used by the terminal on the secondary component carrier. It should be noted that, within the effective duration, the PDCCH monitoring skipping information is valid; outside the effective duration, the PDCCH monitoring skipping information is invalid. If the PDCCH monitoring skipping information is invalid, the terminal will ignore the PDCCH monitoring skipping information. Alternatively, if the PDCCH monitoring skipping information is valid, the terminal will skip the PDCCH monitoring on the predetermined carrier according to the PDCCH monitoring skipping information. In an embodiment, the starting point of the effective duration may be the time point when the terminal receives the PDCCH monitoring skipping information.

It should be noted that those skilled in the art can understand that the methods according to embodiments of the present disclosure may be performed separately or in combination with some methods according to other embodiments of the present disclosure or other methods in the related art.

As shown in FIG. 10, embodiments of the present disclosure provide a method for skipping monitoring. The predetermined carrier is the primary component carrier or the secondary component carrier. The method is performed by a terminal, and includes a following step.

In step 101, the PDCCH monitoring is skipped on the primary component carrier, and the PDCCH monitoring is performed on the secondary component carrier according to an indication of the PDCCH monitoring skipping information; or the PDCCH monitoring is skipped on both the primary component carrier and the secondary component carrier according to an indication of the PDCCH monitoring skipping information.

In an embodiment, the base station sends the PDCCH monitoring skipping information to the terminal, and the PDCCH monitoring skipping information indicates the terminal to skip the PDCCH monitoring on the primary component carrier. After receiving the PDCCH monitoring skipping information, the terminal will skip the PDCCH monitoring on the primary component carrier and continue the PDCCH monitoring on the secondary component carrier according to the PDCCH monitoring skipping information. It should be noted that the terminal will not skip the PDCCH monitoring on the secondary component carrier according to the PDCCH monitoring skipping information. That is, the monitoring on the secondary component carrier will not be affected.

In an embodiment, the base station sends the PDCCH monitoring skipping information to the terminal, and the PDCCH monitoring skipping information indicates the terminal to skip the PDCCH monitoring on the primary component carrier. After receiving the PDCCH monitoring skipping information, the terminal will skip the PDCCH monitoring on the primary component carrier and skip the PDCCH monitoring on the secondary component carrier according to the PDCCH monitoring skipping information. It should be noted that, the terminal will also skip the PDCCH monitoring on the secondary component carrier according to the PDCCH monitoring skipping information. That is, the monitoring on the secondary component carrier will be affected.

It should be noted that those skilled in the art can understand that the methods according to embodiments of the present disclosure may be performed separately or in combination with some methods according to other embodiments of the present disclosure or other methods in the related art.

In an embodiment, a duration of skipping the PDCCH monitoring on the secondary component carrier is determined according to a duration of skipping the PDCCH monitoring on the primary component carrier.

Here, the duration of skipping the PDCCH monitoring on the primary component carrier is the same as the duration of skipping the PDCCH monitoring on the secondary component carri er.

In an embodiment, an effective duration of the PDCCH monitoring skipping information is determined according to a subcarrier spacing of a BWP configured by the primary component carrier; or an effective duration of the PDCCH monitoring skipping information is determined according to a subcarrier spacing of a BWP configured by the primary component carrier and the secondary component carrier; or an effective duration of the PDCCH monitoring skipping information is determined according to a subcarrier spacing of a BWP used by the terminal on the primary component carrier.

As shown in FIG. 11, embodiments of the present disclosure provide a method for skipping monitoring. The predetermined carrier is the primary component carrier. The method is performed by a terminal, and includes a following step.

In step 111, skipping the PDCCH monitoring on the primary component carrier is terminated in advance according to the indication of the PDCCH monitoring skipping information, with a determination that a random access process is initiated on the primary component carrier; or skipping the PDCCH monitoring on the primary component carrier is terminated in advance according to the indication of the PDCCH monitoring skipping information, with a determination that a random access process is initiated on the secondary component carrier; or skipping the PDCCH monitoring on the primary component carrier and the secondary component carrier is terminated in advance according to the indication of the PDCCH monitoring skipping information, with a determination that a random access process is initiated on the secondary component carrier.

In an embodiment, if the PDCCH monitoring skipping information indicates the terminal to skip the PDCCH monitoring on the primary component carrier, and a random access process is initiated on the primary component carrier, the terminal will terminate skipping the PDCCH monitoring on the primary component carrier in advance. That is, the PDCCH skipping will be affected.

In an embodiment, if the PDCCH monitoring skipping information indicates the terminal to skip the PDCCH monitoring on the secondary component carrier, and a random access process is initiated on the secondary component carrier, the terminal will terminate skipping the PDCCH monitoring on the primary component carrier in advance. That is, the PDCCH skipping will be affected. Here, terminating skipping the PDCCH monitoring on the primary component carrier in advance may be stopping the timer set for the primary component carrier in advance.

In an embodiment, if the PDCCH monitoring skipping information indicates the terminal to skip the PDCCH monitoring on the secondary component carrier, and a random access process is initiated on the secondary component carrier, the terminal will terminate skipping the PDCCH monitoring on the primary component carrier and the secondary component carrier in advance. That is, the PDCCH skipping will be affected. Here, terminating skipping the PDCCH monitoring on the primary component carrier and/or the secondary component carrier in advance may be stopping the timer set for the primary component carrier and/or the secondary component carrier in advance.

It should be noted that those skilled in the art can understand that the methods according to embodiments of the present disclosure may be performed separately or in combination with some methods according to other embodiments of the present disclosure or other methods in the related art.

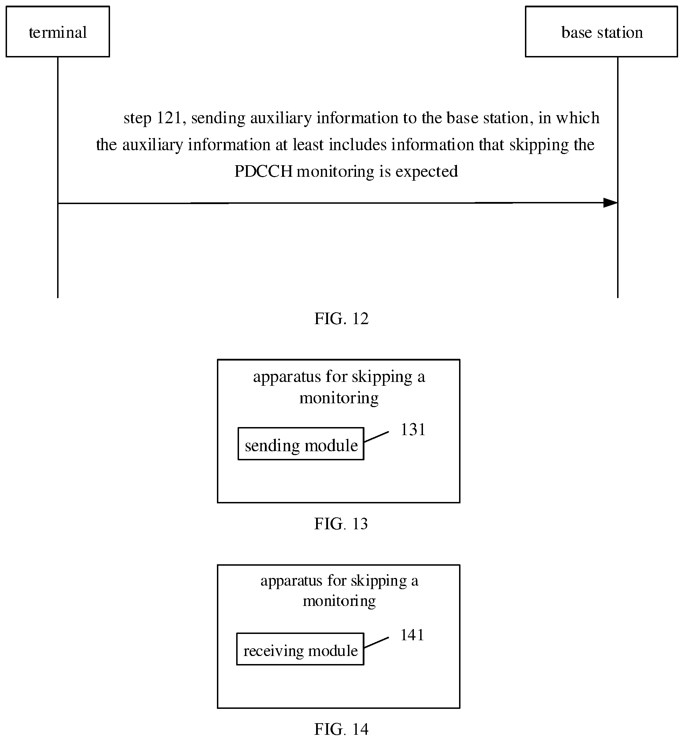

As shown in FIG. 12, embodiments of the present disclosure provide a method for skipping monitoring. The predetermined carrier is the primary component carrier. The method is performed by a terminal, and includes a following step.

In step 121: auxiliary information is sent to the base station, and the auxiliary information at least includes information that skipping the PDCCH monitoring is expected.

In an embodiment, the auxiliary information includes one or more of: a number of secondary cell groups; information of the predetermined carrier; or terminal capability information that skipping the PDCCH monitoring on the predetermined carrier is supported or not supported.

In an embodiment, the terminal sends the auxiliary information to the base station, and the auxiliary information is used to assist the base station in sending the PDCCH monitoring skipping information to the terminal.

In an embodiment, the terminal reports to the base station the auxiliary information that the monitoring skipping is expected. For example, the auxiliary information indicates a number of secondary component carrier groups on which the monitoring skipping is expected to be performed. For example, the auxiliary information indicates that both the primary component carrier and the secondary component carrier are expected to be dormant.

In an embodiment, the terminal reports the auxiliary information to the base station, which indicates a monitoring skipping capability of the terminal. For example, the auxiliary information indicates supporting or not supporting the monitoring skipping; and/or the auxiliary information indicates supporting or not supporting the monitoring skipping on the secondary component carrier of the carrier aggregation; and/or the auxiliary information indicates supporting or not supporting the monitoring skipping on the primary component carrier and the secondary component carrier.

It should be noted that those skilled in the art can understand that the methods according to embodiments of the present disclosure may be performed separately or in combination with some methods according to other embodiments of the present disclosure or other methods in the related art.

As shown in FIG. 13, embodiments of the present disclosure provide an apparatus for skipping monitoring. The apparatus includes a sending module 131.

The sending module 131 is configured to send physical downlink control channel (PDCCH) monitoring skipping information to a terminal. The PDCCH monitoring skipping information indicates the terminal to skip a PDCCH monitoring on a predetermined carrier; and the predetermined carrier includes at least one of a primary component carrier or a secondary component carri er.

It should be noted that those skilled in the art can understand that the methods according to embodiments of the present disclosure may be performed separately or in combination with some methods according to other embodiments of the present disclosure or other methods in the related art.

As shown in FIG. 14, embodiments of the present disclosure provide an apparatus for skipping monitoring. The apparatus includes a receiving module 141.

The receiving module 141 is configured to receive physical downlink control channel (PDCCH) monitoring skipping information sent by a base station. The PDCCH monitoring skipping information indicates the terminal to skip a PDCCH monitoring on a predetermined carrier; and the predetermined carrier includes at least one of a primary component carrier or a secondary component carrier.

It should be noted that those skilled in the art can understand that the methods according to embodiments of the present disclosure may be performed separately or in combination with some methods according to other embodiments of the present disclosure or other methods in the related art.

Embodiments of the present disclosure provide a communication device, which includes: a processor; and a memory for storing processor-executable instructions. The processor is configured to implement the method as described in any embodiment of the present disclosure when running the processor-executable instructions.

The processor may include various types of storage media, which are non-transitory computer storage media, and can continue to memorize the information stored thereon after the communication device is powered off.

The processor may be connected to the memory via a bus or the like, and is configured to read executable programs stored in the memory.

Embodiments of the present disclosure provide a computer storage medium, having stored therein computer-executable programs that, when executed by a processor, cause the method as described in any embodiment of the present disclosure to be implemented.

Regarding the apparatus in the foregoing embodiments, the specific manner in which each module executes operations has been described in detail in embodiments related to the method, and will not be described in detail here.

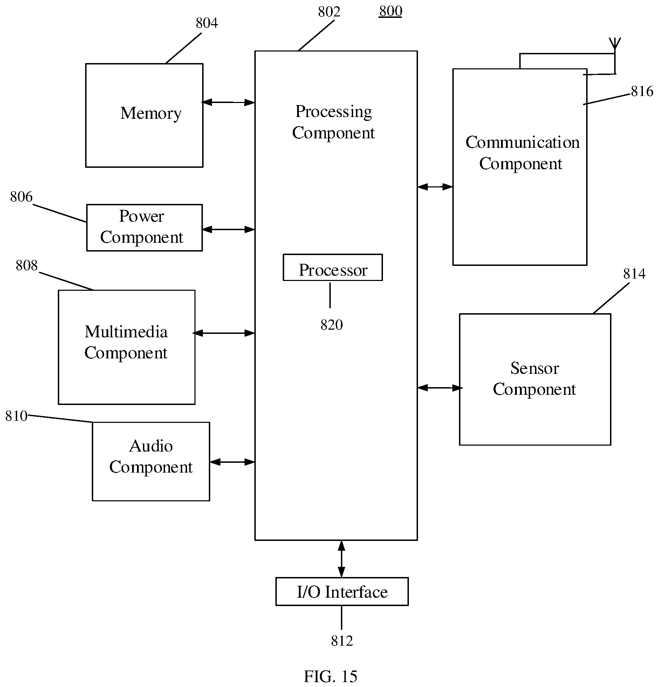

As shown in FIG. 15, an embodiment of the present disclosure provides a structure of the terminal.

Referring to FIG. 15, which shows a terminal 800 according to embodiments of the present disclosure, the terminal 800 may be a mobile phone, a computer, a digital broadcast terminal, a messaging device, a game console, a tablet device, a medical device, a fitness device, a personal digital assistant, or the like.

Referring to FIG. 15, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, phone calls, data communications, camera operations, and recording operations. The processing component 802 can include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the terminal 800 and other devices. The terminal 800 can access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above method.

In an illustrative embodiment, there is also provided a non-transitory computer readable storage medium including instructions, such as included in the memory 804, executable by the processor 820 in the terminal 800, for completing the above-mentioned method. For example, the non-transitory computer-readable storage medium may be a ROM, a random access memory (RAM), a CD-ROM, a magnetic tape, a floppy disc, an optical data storage device, and the like.

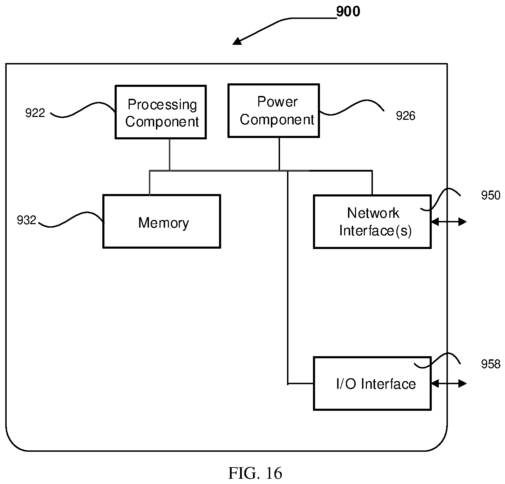

As shown in FIG. 16, an embodiment of the present disclosure shows a structure of a base station. For example, the base station 900 may be provided as a network side device. Referring to FIG. 16, the base station 900 includes: a processing component 922, which further includes one or more processors, and a memory resource represented by a memory 932 for storing instructions executable by the processing component 922, such as application programs. The application program stored in memory 932 may include one or more modules each corresponding to a set of instructions. In addition, the processing component 922 is configured to execute instructions, to perform any method applied to the base station as described above.

The base station 900 may also include a power component 926 configured to perform power management of the base station 900, a wired or wireless network interface 950 configured to connect the base station 900 to a network, and an input/output (I/O) interface 958. The base station 900 can operate an operating system stored in the memory 932, such as Windows Server TM, Mac OS XTM, UnixTM, LinuxTM, FreeBSDTM or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as illustrative only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for skipping monitoring, performed by a base station, comprising:
sending physical downlink control channel (PDCCH) monitoring skipping information to a terminal, wherein the PDCCH monitoring skipping information indicates the terminal to skip a PDCCH monitoring on a predetermined carrier; and the predetermined carrier comprises at least one of a primary component carrier or a secondary component carrier.

2. The method according to claim 1, wherein sending the physical downlink control channel (PDCCH) monitoring skipping information to the terminal comprises:
sending the PDCCH monitoring skipping information to the terminal on the primary component carrier.

3. The method according to claim 1, wherein the predetermined carrier is the secondary component carrier; and the PDCCH monitoring skipping information indicates:
at least one secondary component carrier; and/or
at least one secondary component carrier group, wherein the secondary component carrier group comprises a plurality of secondary component carriers in the same frequency range (FR).

4. The method according to claim 3, wherein the predetermined carrier is the secondary component carrier; and the PDCCH monitoring skipping information indicates the terminal not to terminate skipping the PDCCH monitoring on the secondary component carrier in advance, with a determination that the terminal initiates a random access process on the secondary component carrier.

5. The method according to claim 3, further comprising:
determining an effective duration of the PDCCH monitoring skipping information according to a subcarrier spacing of a bandwidth part (BWP) configured by the secondary component carrier group; or
determining an effective duration of the PDCCH monitoring skipping information according to a subcarrier spacing of a BWP used by the terminal on the secondary component carrier.

6. The method according to claim 1, wherein the predetermined carrier is the primary component carrier or the secondary component carrier; and the PDCCH monitoring skipping information indicates:
skipping the PDCCH monitoring on the primary component carrier and performing the PDCCH monitoring on the secondary component carrier; or
skipping the PDCCH monitoring on both the primary component carrier and the secondary component carrier.

7. The method according to claim 6, wherein a duration of skipping the PDCCH monitoring on the secondary component carrier is determined according to a duration of skipping the PDCCH monitoring on the primary component carrier.

8. The method according to claim 6, further comprising:
determining an effective duration of the PDCCH monitoring skipping information according to a subcarrier spacing of a BWP configured by the primary component carrier;
determining an effective duration of the PDCCH monitoring skipping information according to a subcarrier spacing of a BWP configured by the primary component carrier and the secondary component carrier; or
determining an effective duration of the PDCCH monitoring skipping information according to a subcarrier spacing of a BWP used by the terminal on the primary component carrier.

9. The method according to claim 6, wherein the PDCCH monitoring skipping information indicates:
terminating skipping the PDCCH monitoring on the primary component carrier in advance, with a determination that a random access process is initiated on the primary component carrier;
terminating skipping the PDCCH monitoring on the primary component carrier in advance, with a determination that a random access process is initiated on the secondary component carrier; or
terminating skipping the PDCCH monitoring on the primary component carrier and the secondary component carrier in advance, with a determination that a random access process is initiated on the secondary component carrier.

10. The method according to claim 1, further comprising: receiving auxiliary information sent by the terminal, wherein the auxiliary information at least comprises information that skipping the PDCCH monitoring is expected.

11. The method according to claim 10, wherein the auxiliary information comprises one or more of:
a number of secondary cell groups;
information of the predetermined carrier; or
terminal capability information that skipping the PDCCH monitoring on the predetermined carrier is supported or not supported.

12. A method for skipping monitoring, performed by a terminal, comprising:
receiving physical downlink control channel (PDCCH) monitoring skipping information sent by a base station, wherein the PDCCH monitoring skipping information indicates a terminal to skip a PDCCH monitoring on a predetermined carrier; and the predetermined carrier comprises at least one of a primary component carrier or a secondary component carrier.

13. The method according to claim 12, wherein receiving the PDCCH monitoring skipping information sent by the base station comprises:
receiving, on the primary component carrier, the PDCCH monitoring skipping information sent by the base station.

14. The method according to claim 12, wherein the predetermined carrier is the secondary component carrier; and the PDCCH monitoring skipping information indicates:
at least one secondary component carrier; and/or
at least one secondary component carrier group, wherein the secondary component carrier group comprises a plurality of secondary component carriers in the same frequency range (FR).

15. The method according to claim 14, further comprising:
not terminating skipping the PDCCH monitoring on the secondary component carrier in advance according to an indication of the PDCCH monitoring skipping information, with a determination that a random access process is initiated on the secondary component.

16. The method according to claim 14, wherein an effective duration of the PDCCH monitoring skipping information is determined according to a subcarrier spacing of a bandwidth part (BWP) configured by the secondary component carrier group; or
an effective duration of the PDCCH monitoring skipping information is determined according to a subcarrier spacing of a BWP used by the terminal on the secondary component carrier.

17. The method according to claim 12, wherein the predetermined carrier is the primary component carrier or the secondary component carrier; and the method further comprises:
skipping the PDCCH monitoring on the primary component carrier and performing the PDCCH monitoring on the secondary component carrier according to an indication of the PDCCH monitoring skipping information; or
skipping the PDCCH monitoring on both the primary component carrier and the secondary component carrier according to an indication of the PDCCH monitoring skipping information.

18. The method according to claim 17, wherein a duration of skipping the PDCCH monitoring on the secondary component carrier is determined according to a duration of skipping the PDCCH monitoring on the primary component carrier.

19. The method according to claim 17, wherein
an effective duration of the PDCCH monitoring skipping information is determined according to a subcarrier spacing of a BWP configured by the primary component carrier;
an effective duration of the PDCCH monitoring skipping information is determined according to a subcarrier spacing of a BWP configured by the primary component carrier and the secondary component carrier; or
an effective duration of the PDCCH monitoring skipping information is determined according to a subcarrier spacing of a BWP used by the terminal on the primary component carrier.

20. The method according to claim 17, further comprising:
terminating skipping the PDCCH monitoring on the primary component carrier in advance according to the indication of the PDCCH monitoring skipping information, with a determination that a random access process is initiated on the primary component carrier;
terminating skipping the PDCCH monitoring on the primary component carrier in advance according to the indication of the PDCCH monitoring skipping information, with a determination that a random access process is initiated on the secondary component carrier; or
terminating skipping the PDCCH monitoring on the primary component carrier and the secondary component carrier in advance according to the indication of the PDCCH monitoring skipping information, with a determination that a random access process is initiated on the secondary component carrier.

21. The method according to claim 12, further comprising: sending auxiliary information to the base station, wherein the auxiliary information at least comprises information that skipping the PDCCH monitoring is expected.

22. The method according to claim 21, wherein the auxiliary information comprises one or more of:
a number of secondary cell groups;
information of the predetermined carrier; or
terminal capability information that skipping the PDCCH monitoring on the predetermined carrier is supported or not supported.

23. An apparatus for skipping monitoring, comprising:
a sending module, configured to send physical downlink control channel (PDCCH) monitoring skipping information to a terminal, wherein the PDCCH monitoring skipping information indicates the terminal to skip a PDCCH monitoring on a predetermined carrier; and the predetermined carrier comprises at least one of a primary component carrier or a secondary component carrier.

24. An apparatus for skipping monitoring, comprising:
a receiving module, configured to receive physical downlink control channel (PDCCH) monitoring skipping information sent by a base station, wherein the PDCCH monitoring skipping information indicates a terminal to skip a PDCCH monitoring on a predetermined carrier; and the predetermined carrier comprises at least one of a primary component carrier or a secondary component carrier.

25. A communication device, comprising:
a memory; and
a processor, connected to the memory, and configured to implement the method according to any one of claims 1 to 11 or claims 12 to 22 by executing computer-executable instructions stored in the memory.

26. A computer storage medium, having stored therein computer-executable instructions that, when executed by a processor, cause the method according to any one of claims 1-11 or claims 12-22 to be implemented.
